(19)

Europäisches
Patentamt
European
Patent Office
Office européen
des brevets

(11) **EP 1 435 714 B1**

(12) **EUROPEAN PATENT SPECIFICATION**

(45) Date of publication and mention
of the grant of the patent:
**17.12.2008 Bulletin 2008/51**

(51) Int Cl.:
***H04L 27/26*** (2006.01)

(21) Application number: **03029712.1**

(22) Date of filing: **23.12.2003**

(54) **Method for retrieving sequences of minimum PAPR in an OFDM communication system**

Verfahren zur Rückgewinnung von Folgen minimaler PAPR in einem OFDM-Vermittlungssystem

Procédé de récupération de séquences à rapport minimum de puissance de crête à puissance moyenne
dans un système de communication MDFO

(84) Designated Contracting States:
**AT BE BG CH CY CZ DE DK EE ES FI FR GB GR
HU IE IT LI LU MC NL PT RO SE SI SK TR**

(30) Priority: **27.12.2002 KR 2002085516**

(43) Date of publication of application:
**07.07.2004 Bulletin 2004/28**

(73) Proprietor: **LG ELECTRONICS INC.
Seoul (KR)**

(72) Inventor: **Chang, Seok Il
Ansan,
Gyeonggi-do (KR)**

(74) Representative: **Katérle, Axel et al
Wuesthoff & Wuesthoff
Patent- und Rechtsanwälte
Schweigerstraße 2
81541 München (DE)**

(56) References cited:
**WO-A-99/53662**

• **EETVELT VAN P W J ET AL: "THE DISTRIBUTION
OF PEAK FACTOR IN QPSK MULTI-CARRIER
MODULATION" WIRELESS PERSONAL
COMMUNICATIONS, SPRINGER, DORDRECHT,
NL, vol. 2, no. 1/2, January 1995 (1995-01), pages
87-96, XP000589613 ISSN: 0929-6212**
• **SIMON SHEPHERD ET AL: "Asymptotic Limits in
Peak Envelope Power Reduction by Redundant
Coding in Orthogonal Frequency-Division
Multiplex Modulation" IEEE TRANSACTIONS ON
COMMUNICATIONS, IEEE SERVICE CENTER,
PISCATAWAY, NJ, US, vol. 46, no. 1, January
1998 (1998-01), XP011009107 ISSN: 0090-6778**
• **SUMASU A ET AL: "A METHOD TO REDUCE THE
PEAK POWER WITH SIGNAL SPACE
EXPANSION (ESPAR) FOR OFDM SYSTEM" VTC
2000-SPRING. 2000 IEEE 51ST. VEHICULAR
TECHNOLOGY CONFERENCE PROCEEDINGS.
TOKYO, JAPAN, MAY 15-18, 2000, IEEE
VEHICULAR TECHNOLGY CONFERENCE, NEW
YORK, NY : IEEE, US, vol. VOL. 1 OF 3. CONF. 51,
15 May 2000 (2000-05-15), pages 405-409,
XP000970650 ISBN: 0-7803-5719-1**
• **FRIESE M: "OFDM signals with low crest-factor"
GLOBAL TELECOMMUNICATIONS
CONFERENCE, 1997. GLOBECOM '97., IEEE
PHOENIX, AZ, USA 3-8 NOV. 1997, NEW YORK,
NY, USA,IEEE, US, vol. 1, 3 November 1997
(1997-11-03), pages 290-294, XP010254598 ISBN:
0-7803-4198-8**

**Description**

BACKGROUND OF THE INVENTION

1. Field of the Invention

The present invention relates to a method for reducing a PAPR (peak to average power ratio) in order to prevent performance deterioration in an OFDM (orthogonal frequency division multiplexing) communication system, and in particular to a method for retrieving sequences having a minimum PAPR efficiently and quickly.

2. Description of the Related Art

Generally, in an OFDM (orthogonal frequency division multiplexing) system as one of multi-carrier transmission system, information is simultaneously transmitted through uniformly distributed carrier frequencies. Accordingly, in the OFDM, high data transmission rate can be obtained. Because data is distributed to the whole transmission band in data transmission, the OFDM system is stable even in frequency selective fading and narrow-band interference. The OFDM method has better performance in multipath and mobile communication environment, it can be used for various communication systems such as a local area network, a DAB (digital audio broadcasting), a DVB (digital video broadcasting), a radio ATM (asynchronous transfer mode), an Internet protocol network and an IMT-2000 UMTS (universal mobile telecommunication system).

However, in spite of those merits, the OFDM communication system has a high PAPR (peak to average power ratio) problem. In general, in the OFDM system, peak envelop power of a multi-carrier signal is increased according to the number of carriers. For example, in the OFDM system, when the n-number of signals are overlapped in the same phase, maximum power of a multi-carrier signal is increased as N-times of average power. Accordingly, a PAPR defined as a ratio of maximum power to average power of a multi-carrier is increased, when a PAPR value is great, an amplifier having very wide dynamic range is required for the OFDM communication system. In addition, an AD (analog to digital) converter having a complicated construction and a DA (digital to analog) converter are required. Even in the OFDM system using an amplifier having a wide dynamic range, because amplitude variation of a signal is great, the amplifier may be operated in a non-linear range, a signal may be distorted, and accordingly performance of the amplifier may be lowered.

Accordingly, in order to solve the above-mentioned problems caused by a high PAPR in the OFDM system, many methods have been researched.

One of the methods is for reducing a PAPR by limiting a maximum amplitude of a signal so as to be not greater than a prescribed value by using clipping. However, in the clipping method, by limiting a maximum amplitude by multiplying an OFDM signal by a rectangular window, signal distortion occurs, a bit error rate is increased, frequency characteristics except a band are deteriorated.

Another method for reducing a PAPR is a method for using an error correcting code. In the error correcting code using method, in order to reduce a total PAPR, an OFDM signal is generated by selecting only a codeword having lower maximum power on the basis of a block coding method. However, in the error correcting code using method, in order to select a codeword having lower PAPR, because all possible codewords have to be retrieved, lots of retrieving time is required.

Yet another method for reducing a PAPR is a structural method for defining a binary Golay complementary sequence and generating that kind of sequence. The Golay complementary sequence is a pair of sequences having an addition of an aperiodic autocorrelation function as 0 about all shifts except 0. In case of generating an OFDM signal by using the Golay complementary sequence, a PAPR is not greater than 3dB, and it can be checked by using correlation characteristics of the Golay complementary sequence. In addition, the Golay complementary sequence can be extended to a polyphase sequence appropriate to multilevel phase modulation. However, in the Golay complementary sequence generating method, in order to use a polyphase sequence, attritional retrieving process for retrieving all polyphase sequences has to be performed. In addition, in order to perform coding and decoding, a memory for storing codewords is required, and accordingly it is intricate.

In order to solve the above-mentioned problem, a structural method capable of reducing a PAPR in an OFDM system having comparatively less carriers while maintaining a coding rate and an error correcting performance by using correlation between the Golay complementary sequence and a RM (reed muller) code was disclosed to Davis and Jedwab. However, in the method, a coding rate is remarkably reduced according to increase of the number of carriers.

Document "The distribution of Peak Factor in QPSK Multi-Carrier Modulation", P.W.J. Van Eetvelt, S.J. Sheperd and S.K. Barton, Springer, Dordrecht, NL, Volume 2, No. 1 /2 January 1995, pages 87 to 96 proposes to introduce a method of classifying QPSK modulated OFDM carriers into equivalent classes, wherein all member of a class have the same peak envelope power (PEP) defined as the power of a sine wave with an envelope equal to the maximum complex envelope of the signal. By selecting only those messages which are in the lowest PEP classes information capacity of the channel is reduced by introducing redundancy.

In addition, among methods for reducing a PAPR in the probability aspect in an OFDM communication system using many carriers, there are a SLM (selected mapping) method and a PTS (partial transmit sequence) method.

The SLM method is for generating the M-number of sequences for indicating the same information by a certain methods, selecting a sequence having a minimum PAPR characteristics among them and transmitting it. Because the SLM method selectively transmits a sequence having a minimum PAPR among the M-number of sequences, general PAPR characteristics can be improved. However, in the SLM method, a receiving side requires additional information for restoring an original signal, herein, the additional information may have important influence on a system performance.

The PTS method is for dividing an input sequence into independent parts, adding a phase for minimizing a PAPR to each part and transmitting it. In the PTS method, by selectively transmitting a sequence having a minimum PAPR among several sequences using various phases, general PAPR characteristics can be improved. However, in the PTS method, alike the SLM method, in order to restore original information, additional information is required.

As described-above, in order to solve the problems caused by a high PAPR in the OFDM system, many methods for reducing a PAPR have been presented, however, each method has a certain problems still.

Accordingly, in order to solve the problems caused by a high PAPR, there is a need to grasp PAPR distribution of input sequences in an OFDM system accurately.

SUMMARY OF THE INVENTION

In order to solve the above-mentioned problems, it is an object of the present invention to provide a method for retrieving sequences having a minimum PAPR (peak to average power ratio) efficiently and quickly among all input sequences by using characteristics in which sequences are classified into cosets having the same PAPR in an OFDM (orthogonal frequency division multiplexing) communication system.

It is another object of the present invention to provide a method for grasping PAPR distribution of input sequences in an OFDM communication system quickly and efficiently.

It is another object of the present invention to provide a method used for designing of a device in an OFDM communication system so as to have a lower PAPR on the basis of PAPR distribution state of sequences.

The object of the present invention is achieved by a method according to claim 1.

A method for retrieving sequences causing a minimum PAPR (peak to average power ratio) in an OFDM (orthogonal frequency division multiplexing) system includes classifying all input sequences into cosets causing the same PAPR; retrieving sequences in which the first two elements are fixed as a prescribed value; detecting sequences having a minimum PAPR among the retrieved sequences; selecting cosets in which the detected sequences are included; and extracting sequences included in the selected cosets respectively.

The prescribed value is "0".

Sequences generated by conversion for shifting a prescribed time on a timing axis and conversion for multiplying a random phase are allocated to the same coset in the classifying step.

A sequence $a(\phi)$ and a sequence $a^{(m)}$ are allocated to the same coset on the basis of a sequence $a=(a_0,a_1,..,a_{N-1})$ in the classifying step when the number of carriers is N and a M-PSK modulation method is used, and wherein

$$a(\phi)=(a_0+\phi,\ a_1+\phi,...,a_{N-1}+\phi),\ \phi=0,1,...M-1,$$

$$a^{(m)}=(a^{(m)}_0,a^{(m)}_1,...,a^{(m)}_{N-1}),\ m=0,1,2,..,M-1,$$

and an i-th sequence of the sequence $a^{(m)}$ is

$$a^{(m)}_i=(a_i + i \cdot m)\ \mathrm{mod}\ M,\ i=0,\ 1,\ ...,\ N-1$$

A sequence $a=(0,0,a_2,a_3,...,a_{N-1}),a_i=0,1,2,...M-1$ is retrieved in the retrieving step when the number of carriers is N and a M-PSK modulation method is used.

The retrieving step includes the sub-steps of calculating PAPRs of the retrieved sequences; selecting a minimum PAPR among the calculated PAPRs; and detecting sequences having the minimum PAPR among the retrieved sequences.

The method further includes calculating PAPRs of sequences in which the first two elements are fixed as a prescribed value; and analyzing PAPR distribution of the all input sequences by using the number of sequences respectively allocated to cosets in which the sequences having the first two elements fixed as the prescribed value are included and the calculated PAPRs.

The analyzed PAPR distribution state is used for determining a dynamic range required for a device of the OFDM system.

A method for retrieving sequences having a minimum PAPR (peak to average power ratio) in an OFDM (orthogonal frequency division multiplexing) system includes retrieving sequences in which the first two elements are fixed as "0"; calculating PAPRs of the retrieved sequences; selecting a minimum PAPR among the calculated PAPRs and detecting sequences causing the minimum PAPR; selecting cosets in which the detected sequences are included; and generating sequences respectively included in the selected cosets.

Sequences having the first two elements fixed as "0" are included in different cosets, and sequences included in one coset have the same PAPR characteristics.

Sequences $a=(0,0,a_2,a_3,..,a_i,...,a_{N-1})$ are retrieved in the retrieving step when the number of carriers is N and a M-PSK modulation method is used, and wherein $a_i=0,1,2,...,M-1$ and $i=2,3,...,N-1$.

Sequences having the same PAPR characteristics with the detected sequence's PAPR are generated by a first conversion for multiplying the detected sequence and a prescribed phase and a second conversion for shifting the detected sequence as a prescribed time on a timing axis in the generating step.

sequences generated by the first conversion are

$$a(\phi)=(a_0+\phi,\ a_1+\phi,...,a_{N-1}+\phi),\ \phi=0,1,...M-1,$$

and

sequences generated by the second conversion are

$$a^{(m)}=(a^{(m)}_0,a^{(m)}_1,...,a^{(m)}_{N-1}),\ m=0,1,2,..,M-1$$

when the number of carriers is N and a M-PSK modulation method is used, and wherein an i-th sequence of the sequence $a^{(m)}$ is

$$a^{(m)}_i=(a_i + i \cdot m) \bmod M,\ i=0,\ 1,\ ...,\ N-1$$

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 shows a construction of a general OFDM (orthogonal frequency division multiplexing) communication system;

Figure 2 is a flow chart illustrating a method for retrieving sequences having a minimum PAPR in an OFDM communication system in accordance with the present invention; and

Figure 3 shows an example of a coset in accordance with the present invention.

DETAILED DESCRIPTION OF THE PREFERRED EMBODIMENT

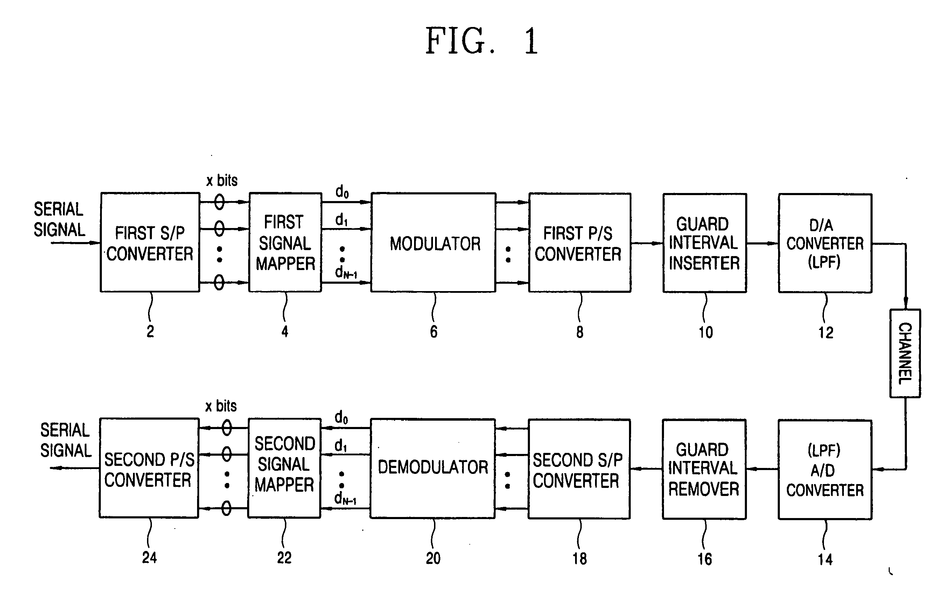

Figure 1 shows a construction of a general OFDM (orthogonal frequency division multiplexing) communication system.

As depicted in Figure 1, the general OFDM communication system includes a transmitting unit and a receiving unit. The transmitting unit includes a first serial to parallel converter 2 for converting a serial input digital signal into a parallel signal; a first signal mapper 4 for converting a digital signal outputted from the first serial to parallel converter 2 into a QPSK (quadrature phase shift keying) signal; a modulator 6 for modulating each signal parallel-outputted from the first signal mapper 4 by IDFT (inverse discrete Fourier transform); a first parallel to serial converter 8 for converting the signal parallel-outputted from the modulator 6 into a serial signal; a guard interval inserter for inserting a guard internal into the signal outputted from the first parallel to serial converter 8; and a digital to analog converter 12 for converting the digital signal outputted from the guard interval inserter 10 into an analog signal, removing noise thereof and transmitting the analog signal through a channel. The receiving unit includes an analog to digital converter 14 for removing noise from the signal received through the channel and converting it into a digital signal; a guard interval remover 16 for removing the guard interval from the signal outputted from the analog to digital converter 14; a second serial to parallel converter 18 for converting the signal outputted from the guard interval remover 16 into a parallel signal; a demodulator 20 for demodulating the parallel signal from the second serial to parallel converter 18 respectively by a discrete Fourier transform; a second signal mapper 22 for converting a QPSK signal from the demodulator 20 into a digital signal; and a second parallel to serial converter 24 for converting the digital signal parallel-outputted from the second signal mapper 22 into a serial signal.

In general, in transmission of the OFDM signal, an amplifier is required, however, it is not shown in Figure1.

The operation of the general OFDM communication system will be described.

The first serial to parallel converter 2 converts a received serial digital signal into a parallel signal, the first signal mapper 4 performs mapping of the parallel signal so as to convert it into a QPSK signal, the modulator 6 converts the QPSK signal by the IDFT method, and the first parallel to serial converter 8 converts the modulated IDFT signal into a serial signal. The guard interval inserter 10 inserts a guard interval into the serial signal in order to prevent interference occurrence, and the serial to analog converter 12 converts the serial digital signal into an analog signal, cuts off noise through low pass filtering and transmits the analog signal through an allocated channel.

When the signal is received through the allocated channel, the analog to digital converter 14 removes noise from the received analog signal and converts the analog signal into a digital signal, the guard interval remover 16 removes the guard interval from the digital signal, and the second serial to parallel converter 18 converts the digital signal into a parallel signal. The demodulator 20 demodulates the parallel signal through DFT, the second signal mapper 22 performs mapping of the demodulated parallel signal into a digital signal, and the second parallel to serial converter 24 converts the parallel digital signal into a serial digital signal.

In the present invention, by using characteristics in which all sequences usable in a general OFDM communication system are classified into cosets having the same PAPR, a method for obtaining PAPR distribution of all sequences and retrieving sequences having a minimum PAPR quickly will be described.

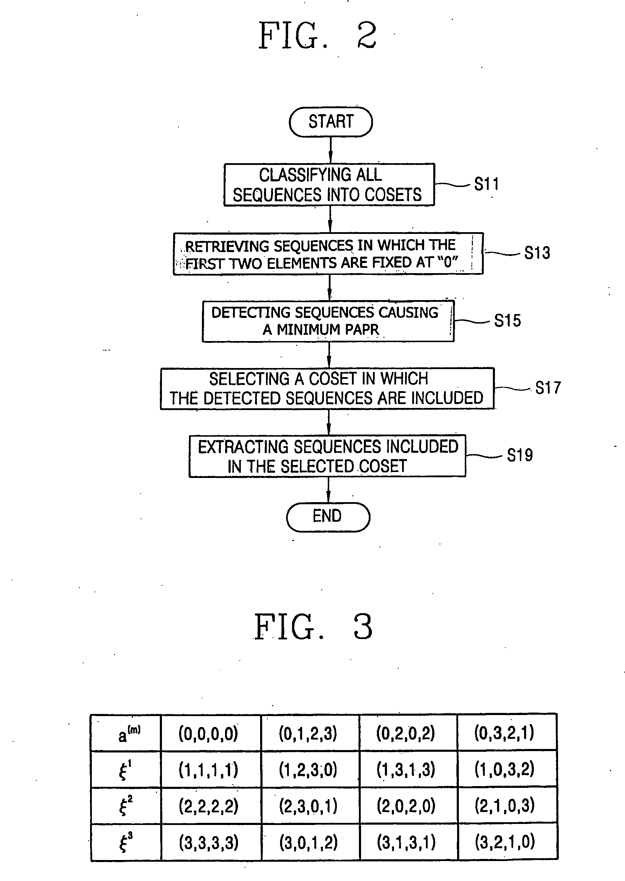

Figure 2 is a flow chart illustrating a method for retrieving sequences having a minimum PAPR in an OFDM communication system in accordance with the present invention.

In the present invention, by using a certain characteristics, all input sequences are classified into cosets having the same PAPR as shown at step S11. Sequences in which the first two elements have "0" value are retrieved as shown at step S13, and a PAPR of the retrieved sequences is respectively calculated. In the present invention, among the calculated PAPRs a minimum PAPR is selected, and a sequence causing the minimum PAPR is selected as shown at step S15. A coset in which the sequence causing the minimum PAPR is included is checked as shown at step S17, and sequences of the checked coset are extracted as sequences causing the minimum PAPR as shown at step S19.

It will be described in more detail.

First, a PAPR (peak to average power ratio) of an OFDM (orthogonal frequency division multiplexing) signal will be described.

In the OFDM system using the N-number of carriers, a modulation signal allocated to a k-th carrier in a given symbol section [0, T] is $A_k$(k=0,1,..N-1), an OFDM signal s(t) can be described as following.

$$s(t) = \sum_{k=0}^{N-1} A_k e^{j2\pi kt/T} \quad \text{-----------Equation 1}$$

In Equation 1, $A_k$ is one of symbols of signal constellation according to a modulation method.

A PAPR of an OFDM signal corresponding to Equation 1 is a ratio of maximum instantaneous power to average power, and it can be described as following Equation 2.

$$PAPR = \max_{0 \le t(T} \frac{\left|s(t)\right|^2}{E\left[\left|s(t)\right|^2\right]} \quad \text{----------------Equation 2}$$

Herein, E is an operator having an average.

Next, PAPR characteristics of an OFDM signal using a M-PSK modulation method will be described.

In the OFDM communication system using the M-PSK modulation method, PAPR of a generated OFDM signal has a certain characteristics. In description of two characteristics among them, as a first characteristic (A), PAPR characteristics of an OFDM signal are not changed although a prescribed phase is multiplied by an OFDM signal. As a second characteristic (B), PAPR characteristics of an OFDM signal are not changed although an OFDM signal is shifted as a prescribed time on a timing axis.

(A) First characteristic

When $\xi = \exp(2\pi j/M)$, i-th element $A_i$ can be described as $A_i = \xi^{a_i}$, $a_i \in \{0,1,...,M-1\}$, a sequence A can be corresponded to a sequence $a=(a_0, a_1,.., a_{N-1})$. Accordingly, a signal s(t) in Equation 1 can be described as following Equation 3.

$$s(t) = \sum_{k=0}^{N-1} \xi^{a_k} W^{kt} \quad \text{----------------- Equation 3}$$

Herein, $W = \exp(j2\pi /T)$.

Although a certain phase $\xi^{\phi}$ is multiplied by the OFDM signal s(t), PAPR characteristics of the signal s(t) are not varied, and the M-number of sequence $a(\phi) = (a_0 + \phi, a_1 + \phi,..., a_{N-1} + \phi)$, $\phi = 0, 1,...M-1$ has the same PAPR with the sequence a. Herein, addition operation is performed on a $F_M$(Field) (The addition operation is closed in a modulo M Field).

In more detail, when a signal obtained by multiplying the signal s(t) by the certain phase $\xi^{\phi}$ is s'(t),

$$s'(t) = s(t) \cdot \xi^{\phi}$$

A PAPR of the s'(t) can be calculated by using Equation 2.

$$PAPR\{s(t)\} = \max_{0 \le t < T} \frac{|s'(t)|^2}{E[|s'(t)|^2]} = \max_{0 \le t < T} \frac{s'(t) \cdot s'(t)^*}{E[s'(t) \cdot s'(t)^*]}$$
$$= \max_{0 \le t < T} \frac{s(t)\xi^{\phi} \cdot s(t)^* \xi^{-\phi}}{E[s(t)\xi^{\phi} \cdot s(t)^* \xi^{-\phi}]} = \max_{0 \le t < T} \frac{s(t) \cdot s(t)^*}{E[s(t) \cdot s(t)^*]} \quad \text{------- Equation 4}$$
$$= \max_{0 \le t < T} \frac{|s(t)|^2}{E[|s(t)|^2]}$$

Accordingly, a PAPR of the signal s'(t) is the same with a PAPR of the signal s(t).

(B) Second characteristic

When an i-th element $a^{(m)}_i$ of a sequence $a^{(m)} = (a^{(m)}_0, a^{(m)}_1,..., a^{(m)}_{N-1})$ about a random integer m(m=0,1,2,.., M-1) is defined as

$$a^{(m)}{}_i = (a_i + i \cdot m) \bmod M, \ i = 0, 1, \ldots, N-1$$

a PAPR of the M-number of sequence $a^{(m)}$ is the same with a PAPR of the sequence a.

In more detail, an OFDM signal $s^{(m)}(t)$ corresponding to the $a^{(m)}$ can be described as following.

$$s^{(m)}(t) = \xi^{a_0} + \xi^{a_1 + m} W^t + \xi^{a_2 + 2m} W^{2t} + \ldots + \xi^{a_{N-1} + (N-1)m} W^{(N-1)t}$$

When $\tau = mT/M$, it can be described as

$$s^{(m)}(t) = \xi^{a_0} + \xi^{a_1} W^{t + \tau_m} + \xi^{a_2} W^{2(t + \tau_m)} + \ldots + \xi^{a_{N-1}} W^{(N-1)(t + \tau_m)}$$

In more detail, $s^{(m)}(t) = s(t + \tau_m)$, it can be known $s^{(m)}(t)$ is a signal shifted as $\tau_m$ on a timing axis. OFDM signal is a cycle signal having a cycle T, and $a^{(m)}$ and a generate an OFDM signal having the same PAPR characteristics.

When the first characteristic (A) and the second characteristic (B) are synthesized, two conversions not changing PAPR characteristics of a signal exist, the $M^2$-number of sequences can generate signals having the same PAPR characteristics. When the number of carriers is N and the M-PSK modulation method is used, the number of occurrable OFDM signals is $M^N$, and a PAPR retriever in accordance with the present invention classifies the $M^N$-number of OFDM signals into cosets consisting of the $M^2$-number of sequences having the same PAPR. Accordingly, the number of cosets is $M^N / M^2 = M^{N-2}$.

For example, in a QPSK modulation when N=4 and M=4, the number of sequences is $M^N = 4^4 = 256$. According to conversion by the first characteristic (A) and conversion by the second characteristic (B), the $M^2 = 4^2 = 16$ number of sequences have the same PAPR characteristics. Accordingly, in the PAPR retriever in accordance with the present invention, the total 256 number of sequences are classified into the $M^{N-2} = 4^{4-2} = 16$ number of cosets according to conversion by the first characteristic (A) and conversion by the second characteristic (B) as shown at step S11.

Figure 3 illustrates a coset among the sixteen cosets.

In more detail, in the PAPR retriever, by converting a (0,0,0,0) sequence by using the first and second characteristics (A), (B), 15 sequences having the same PAPR with PAPR characteristics of the (0,0,0,0) sequence are generated. The PAPR retriever allocates the (0,0,0,0) sequence and the generated 15 sequences to one coset. Accordingly, the 16 sequences are allocated to one coset having the same PAPR. With reference to Equation 1, an OFDM signal about the (0,0,0,0) sequence has a maximum PAPR value as N, sequences allocated to the coset in which the (0,0,0,0) sequence is allocated have the same PAPR characteristics. As described-above, the PAPR retriever classifies all 256 sequences into 16 cosets.

For reference, it is known input sequences having the same PAPR are generated by a certain law, in general, a coset having a (0,0,0,0) sequence can be generated by using a linear block code. For example, a coset about the sequence (0,0,0,0) is regarded as a block code having 16 codewords, a generation matrix can be described as following, herein, an operation of the linear block code is defined by the F4 (modulo 4 Field).

$$G = \begin{bmatrix} 1111 \\ 0123 \end{bmatrix}$$

In the meantime, in the OFDM system having the N-number of carriers and using the M-PSK modulation method, in order to retrieve an input sequence having a minimum PAPR, a sequence in which the first two elements of the input sequence are fixed as 0 and only the rest elements are varied is considered. In more detail, only following type sequences are considered.

$$a = (0, 0, a_2, a_3, \ldots, a_i, \ldots, a_{N-1}), \ a_i = 0, 1, 2, \ldots M-1$$

Finally, by considering only the $M^N / M^2 = M^{N-2}$ number of sequences (included in that type) among the total $M^N$ number of input sequences, an input sequence causing a minimum PAPR can be retrieved.

In more detail, in that example, Gaussian elimination can be applied to a generation matrix in the F4, a generation matrix after applying the Gaussian elimination can be described as following.

$$G = \begin{bmatrix} 1032 \\ 0123 \end{bmatrix} = \begin{bmatrix} I_2 & P \end{bmatrix}$$

A check matrix of the code can be described as following.

$$P = \begin{bmatrix} -P^t & I_{n-k} \end{bmatrix} = \begin{bmatrix} 1210 \\ 2101 \end{bmatrix}$$

In the check matrix, the coset including the (0,0,0,0) sequence, namely, codewords satisfying the check matrix have a syndrome as (0, 0).

When block codes have different syndromes, they have characteristics included in different cosets. In more detail, sequences which are generated by the check matrix and has the same syndrome have the same PAPR. In general, a check matrix of the code can be described as following.

$$P = \begin{bmatrix} -P^t & I_{n-2} \end{bmatrix}$$

- $P^t$ is a matrix having two columns. When the first two elements of a sequence are fixed as 0, a syndrome is generated by the rest elements except the two elements. In addition, the syndrome is generated by $I_{n-2}$, when an input sequence is a=$(0,0,a_2,a_3,...,a_{N-1})$, a syndrome (S) has a form as S=$(a_2,a_3,...,a_{N-1})$.

In more detail, sequences having the a=$(0,0,a_2,a_3,...,a_{N-1})$ form are included in different cosets, elements of each coset consists of sequences having the same PAPR.

Accordingly, in the PAPR retriever in accordance with the present invention, in order to retrieve sequences causing a minimum PAPR, sequences having the a=$(0,0,a_2,a_3,...,a_i,...,a_{N-1})$ form respectively included in different cosets, namely, sequences in which the first two elements are fixed as "0" are retrieved as shown at step S13.

In the PAPR retriever, a PAPR of sequences in which the first two elements are fixed as "0" is respectively calculated, among the calculated PAPRs a minimum PAPR is selected, and sequences having the selected minimum PAPR are detected from the sequences in which the first two elements are fixed as "0" as shown at step S15.

In the PAPR retriever, cosets in which the detected sequences are included are selected as shown at step S17, and sequences included in the selected cosets are selected as sequences having a minimum PAPR as shown at step S19. Accordingly, in the PAPR retriever, without calculating a PAPR of all sequences as a length N, by calculating a PAPR of sequences in which the first two elements are fixed as "0" respectively, selecting sequences having a minimum PAPR among the calculated PAPRs and selecting a coset in which the selected sequences are included, sequences causing a minimum PAPR can be retrieved quickly and efficiently.

In the OFDM system using the M-PSK modulation method and having the N-number of carriers, in order to retrieve an input sequence causing a minimum PAPR, only the $M^{N-2}$ number of sequences are considered, and accordingly complexity is reduced as $M^2$.

In the meantime, in order to analyze PAPR distribution of all sequences used in the OFDM system, the PAPR retriever classifies all the sequences into cosets having the same PAPR characteristics by using conversion for multiplying a certain phase and conversion for shifting a prescribed time. Afterward, because PAPRs in which the early two elements are fixed as "0" are included in different cosets, the PAPR retriever calculates PAPR of the sequences in which the first two elements are fixed as "0". The PAPR retriever judges PAPR of sequences of a coset having the certain sequences in which the first two elements are fixed as "0" has the same PAPR with the certain sequences, and it calculates PAPR distribution of the all sequences on the basis of the PAPR of the sequences in which the first two elements are fixed as "0" and the number of sequences of the pertinent coset. Accordingly, in the PAPR retriever, by calculating PAPRs of sequences in which the first two elements are fixed as "0" without calculating a PAPR of all sequences, PAPR distribution of the all sequences can be efficiently obtained.

In the OFDM system using the M-PSK modulation method and having the N-number of carriers, in order to analyze PAPR distribution of all sequences, among the $M^N$ number of sequences, only the $M^{N-2}$ number of sequences are considered.

As described-above, when PAPR distribution of all sequences is analyzed, with reference to the analyzed PAPR distribution, a system designer can select sequences usable in the OFDM system so as to have a good BER (bit error rate) and a PAPR not too high, in addition, the designer can design a device such as an amplifier, an AD converter or a DA converter, etc. constructing the OFDM system as a device having a low dynamic range.

As described-above, in the present invention, by classifying all input sequences into cosets having the same PAPR and using characteristics in which sequences having first two elements fixed as "0" are included in different cosets, it is possible to retrieve a sequence having a minimum PAPR quickly and efficiently on the basis of PAPR of the sequences having the first two elements fixed as "0".

In the present invention, by classifying all input sequences into cosets having the same PAPR and using characteristics in which sequences having the first two elements fixed as "0" are included in different cosets, it is possible to retrieve PAPR distrbution of all sequences quickly and efficiently on the basis of PAPR of the sequences having the first two elements fixed as "0". Accordingly, in the OFDM system having the N-number of carriers and using the M-PSK modulation method, in case of retrieving sequences causing a minimum PAPR, without calculating PAPRs of the total $M^N$ number of sequences, by calculating only the $M^{N-2}$ number of sequences, it is possible to reduce retrieving complexity. In addition, the greater a size M of using constellation, retrieving complexity is remarkably reduced.

In the present invention, it is possible to design a device of the OFDM system having a good BER performance and a lower PAPR on the basis of PAPR distribution state of all sequences usable in the OFDM system. In addition, in the present invention, the OFDM system can be constructed as a device having a lower dynamic range.

**Claims**

1. A method for retrieving sequences causing a minimum PAPR, peak to average power ratio, of an OFDM, orthogonal frequency division multiplexing, signal in an OFDM system using a number N of sub-carriers, each sequence having N elements representative of modulation symbols allocated to the sub-carriers, the method comprising the step of:

   - classifying (S11) all input sequences into cosets causing the same PAPR;

   **characterized by** the steps of:

   - retrieving (S13) sequences in which the first two elements have a prescribed value;
   - detecting (S15) sequences causing a minimum PAPR among the retrieved sequences;
   - selecting (S17) cosets in which the detected sequences are included; and
   - extracting (S19) sequences included in the selected cosets.

2. The method of claim 1, wherein the prescribed value is "0".

3. The method of claim 1 or 2, wherein the classifying step (S11) allocates to the same coset, sequences generated by conversion through a time shift or a phase multiplication.

4. The method of any one preceding claim, wherein M-PSK, M-ary phase shift keying, is used for sub-carrier modulation, and wherein in the classifying step, sequences a, $a(\Phi)$ and $a^{(m)}$ are allocated to the same coset, wherein

$$a = (a_0, a_1,.., a_{N-1})$$

wherein $a_0$, $a_1$,.., $a_{N-1}$ designate the N elements of the sequence a;

$$a(\Phi) = (a_0 + \Phi, a_1 + \Phi,..., a_{N-1} + \Phi); \quad \Phi \in \{0, 1,..., M-1\}$$

$$a^{(m)} = (a^{(m)}_0, a^{(m)}_1,..., a^{(m)}_{N-1}); \quad m \in \{0, 1,..., M-1\}$$

wherein an i-th element $a^{(m)}_i$ from $a^{(m)}$ with i = 0,1,..., N-1 is defined as:

$$a^{(m)}_i = (a_i + i \cdot m) \bmod M$$

5. The method of any one preceding claim, wherein M-PSK, M-ary phase shrift keying, is used for sub-carrier modulation, and wherein the retrieving step retrieves sequences a = $(0, 0, a_2, a_3,..., a_{N-1})$, wherein $a_2, a_3,.., a_{N-1}$ designate the third through last elements of the sequence a.

6. The method of any one preceding claim, further comprising:

   calculating PAPRs of sequences in which the first two elements have the prescribed value; and
   analyzing PAPR distribution of all input sequences by using the number of sequences respectively allocated
   to cosets in which the sequences having the first two elements set to the prescribed value are included and the
   calculated PAPRs.

7. The method of claim 6, wherein the analyzed PAPR distribution is used for determining a dynamic range required
   for a device of the OFDM system.

**Patentansprüche**

1. Verfahren zur Gewinnung von Sequenzen, die ein minimales Verhältnis von Spitzen- zu Durchschnittsleistung, kurz
   PAPR, eines OFDM - bzw. Orthogonal Frequency Division Mulitplexing - Signals in einem eine Anzahl N von
   Subträgern verwendenden OFDM-System verursachen, wobei jede Sequenz N Elemente aufweist, welche den
   Subträgern zugewiesene Modulationssymbole darstellen, wobei das Verfahren den Schritt umfasst:

   - Klassifizieren (S11) aller eingegebenen Sequenzen in Restklassen, die ein gleiches Verhältnis von Spitzen-
   zu Durchschnittsleistung bewirken,

   **gekennzeichnet durch** die Schritte:

   - Ermitteln (S13) solcher Sequenzen, in denen die ersten beiden Elemente einen vorgeschriebenen Wert haben,
   - Erfassen (S15) solcher Sequenzen, die unter den ermittelten Sequenzen ein minimales Verhältnis von Spitzen-
   zu Durchschnittsleistung bewirken,
   - Auswählen (S17) von Restklassen, in denen die erfassten Sequenzen enthalten sind, und
   - Extrahieren (S19) von Sequenzen, die in den ausgewählten Restklassen enthalten sind.

2. Verfahren nach Anspruch 1, wobei der vorgeschriebene Wert "0" ist.

3. Verfahren nach Anspruch 1 oder 2, wobei der Klassifizierungsschritt (S11) Sequenzen, die durch Konversion mittels
   Zeitverschiebung oder Phasenmultiplikation erzeugt wurden, derselben Restklasse zuteilt.

4. Verfahren nach einem der vorhergehenden Ansprüche, wobei M-PSK bzw. M-wertige Phasenumtastung für die
   Subträgermodulation verwendet wird und wobei bei dem Klassifizierungsschritt Sequenzen a, $a(\phi)$ und $a^{(m)}$ derselben Restklasse zugeteilt werden, wobei

$$a = (a_0, a_1, ..., a_{N-1})$$

wobei $a_0$, $a_1$, ..., $a_{N-1}$ die N Elemente der Sequenz a bezeichnen,

$$a(\phi) = (a_0 + \phi, a_1 + \phi, ..., a_{N-1} + \phi); \quad \phi \in \{0, 1, ..., M-1\}$$

$$a^{(m)} = (a^{(m)}_0, a^{(m)}_1, ..., a^{(m)}_{N-1}); \quad m \in \{0, 1, ..., M-1\}$$

wobei ein i-tes Element $a^{(m)}_i$ aus $a^{(m)}$ mit i = 0, 1, ..., N-1 definiert ist als:

$$a^{(m)}_i = (a_i + i \bullet m) \bmod M$$

**5.** Verfahren nach einem der vorhergehenden Ansprüche, wobei M-PSK bzw. M-wertige Phasenumtastung für die Subträgermodulation verwendet wird und wobei der Ermittlungsschritt Sequenzen a = (0, 0, $a_2$, $a_3$, ..., $a_{N-1}$) ermittelt, wobei $a_2$, $a_3$, ..., $a_{N-1}$ das dritte bis letzte Element der Sequenz a bezeichnen.

**6.** Verfahren nach einem der vorhergehenden Ansprüche, ferner umfassend:

- Berechnen der Spitzen- zu Durchschnittsleistungen von Sequenzen, bei denen die ersten beiden Elemente den vorgeschriebenen Wert haben, und
- Analysieren der PAPR-Verteilung aller eingegebenen Sequenzen unter Verwendung der Anzahl von Sequenzen, die Restklassen zugeordnet sind, in denen die Sequenzen enthalten sind, deren erste beide Elemente auf den vorgeschriebenen Wert gesetzt sind, sowie der berechneten Verhältnisse von Spitzen- zu Durchschnittsleistung.

**7.** Verfahren nach Anspruch 6, wobei die analysierte PAPR-Verteilung für die Bestimmung eines dynamischen Bereichs verwendet wird, der für ein Gerät des OFDM-Systems erforderlich ist.

**Revendications**

**1.** Procédé servant à récupérer des séquences entraînant un rapport de puissance valeur de crête sur valeur moyenne, PAPR, minimum d'un signal OFDM, multiplexage par répartition de fréquence orthogonale, dans un système OFDM utilisant un nombre N de sous-porteuses, chaque séquence possédant N éléments représentatifs des symboles de modulation attribués aux sous-porteuses, le procédé comprenant l'étape consistant à :

- classer (S11) toutes les séquences d'entrée dans des co-ensembles entraînant le même PAPR ; **caractérisé par** les étapes consistant à :
- récupérer (S13) des séquences dans lesquelles les deux premiers éléments possèdent une valeur prescrite ;
- détecter (S15) des séquences entraînant un PAPR minimum parmi les séquences récupérées ;
- sélectionner (S17) des co-ensembles dans lesquels les séquences détectées sont comprises ; et
- extraire (S19) des séquences comprises dans les co-ensembles sélectionnés.

**2.** Procédé selon la revendication 1, dans lequel la valeur prescrite est « 0 ».

**3.** Procédé selon la revendication 1 ou 2, dans lequel l'étape de classification (S11) attribue au même co-ensemble, des séquences générées grâce à une conversion par le biais d'un décalage temporel ou d'une multiplication de phase.

**4.** Procédé selon l'une quelconque des revendications précédentes, dans lequel une modulation par déplacement de phase de M état de phase M-PSK est utilisée pour une modulation de sous-porteuse, et dans lequel dans l'étape de classification, les séquences a, a($\Phi$) et a(m) sont attribuées au même co-ensemble, dans lequel

$$a = (a_0, a_1, ..., a_{N-1})$$

dans lequel $a_0$, $a_1$, ..., $a_{N-1}$ désignent les N éléments de la séquence a ;

$$a(\Phi) = (a_0 + \Phi, a_1 + \Phi, ..., a_{N-1} + \Phi) ; \Phi \in \{0, 1, ..., M\text{-}1\}$$

$$a^{(m)} = (a^{(m)}_0, a^{(m)}_1, ..., a^{(m)}_{N-1}) ; m \in \{0, 1, ..., M\text{-}1\}$$

dans lequel un i-ème élément $a^{(m)}$, à partir de $a^{(m)}$ avec i = 0, 1, ..., N-1 est défini comme :

$$a^{(m)}_i = (a_i + i \cdot m) \bmod M$$

**5.** Procédé selon l'une quelconque des revendications précédentes, dans lequel une modulation par déplacement de phase de M état de phase M-PSK est utilisée pour une modulation de sous-porteuse, et dans lequel l'étape de récupération récupère les séquences a = $(0, 0, a_2, a_3, ..., a_{N-1})$, dans lesquelles $a_2$, $a_3$, ..., $a_{N-1}$ désignent le troisième jusqu'au dernier éléments de la séquence a.

**6.** Procédé selon l'une quelconque des revendications précédentes comprenant en outre :

calculer des PAPR des séquences dans lesquels les deux premiers éléments possèdent la valeur prescrite ; et analyser la distribution PAPR de toutes les séquences d'entrée en utilisant le nombre de séquences respectivement attribuées aux co-ensembles dans lesquels les séquences possédant les deux premiers éléments définis sur la valeur prescrite sont compris et les PAPR calculés.

**7.** Procédé selon la revendication 6, dans lequel la distribution PAPR analysée est utilisée pour déterminer une gamme dynamique requise pour un dispositif du système OFDM.

# FIG. 1

EP 1 435 714 B1

SERIAL SIGNAL → | FIRST S/P CONVERTER (2) | → x bits → | FIRST SIGNAL MAPPER (4) | → $d_0$, $d_1$, ⋮, $d_{N-1}$ → | MODULATOR (6) | → | FIRST P/S CONVERTER (8) | → | GUARD INTERVAL INSERTER (10) | → | D/A CONVERTER (LPF) (12) | → CHANNEL

CHANNEL → | (LPF) A/D CONVERTER (14) | → | GUARD INTERVAL REMOVER (16) | → | SECOND S/P CONVERTER (18) | → | DEMODULATOR (20) | → $d_0$, $d_1$, ⋮, $d_{N-1}$ → | SECOND SIGNAL MAPPER (22) | → x bits → | SECOND P/S CONVERTER (24) | → SERIAL SIGNAL

# FIG. 2

```
           START
             │
             ▼
┌─────────────────────────┐
│    CLASSIFYING ALL      │───── S11
│ SEQUENCES INTO COSETS   │
└─────────────────────────┘
             │
             ▼
┌─────────────────────────────┐
│ RETRIEVING SEQUENCES IN     │───── S13
│ WHICH THE FIRST TWO         │
│ ELEMENTS ARE FIXED AT "0"   │
└─────────────────────────────┘
             │
             ▼
┌─────────────────────────┐
│ DETECTING SEQUENCES     │───── S15
│ CAUSING A MINIMUM PAPR  │
└─────────────────────────┘
             │
             ▼
┌──────────────────────────────┐
│   SELECTING A COSET IN WHICH  │───── S17
│ THE DETECTED SEQUENCES ARE    │
│          INCLUDED             │
└──────────────────────────────┘
             │
             ▼
┌──────────────────────────────┐
│ EXTRACTING SEQUENCES INCLUDED │───── S19
│     IN THE SELECTED COSET     │
└──────────────────────────────┘
             │
             ▼
           END
```

# FIG. 3

| $a^{(m)}$ | (0,0,0,0) | (0,1,2,3) | (0,2,0,2) | (0,3,2,1) |
|-----------|-----------|-----------|-----------|-----------|
| $\xi^1$   | (1,1,1,1) | (1,2,3,0) | (1,3,1,3) | (1,0,3,2) |
| $\xi^2$   | (2,2,2,2) | (2,3,0,1) | (2,0,2,0) | (2,1,0,3) |
| $\xi^3$   | (3,3,3,3) | (3,0,1,2) | (3,1,3,1) | (3,2,1,0) |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P.W.J. VAN EETVELT ; S.J. SHEPERD ; S.K. BARTON.** *The distribution of Peak Factor in QPSK Multi-Carrier Modulation,* 02 January 1995, vol. 2 (1), 87-96